# EUROPÄISCHE PATENTSCHRIFT

(11) **EP 1 520 682 B1**
(45) Veröffentlichungstag und Bekanntmachung des Hinweises auf die Patenterteilung: **21.03.2007**
(21) Anmeldenummer: 04016147.3
(22) Anmeldetag: 08.07.2004
(51) Int. Cl.: B29C 51/26

(54) **Thermoformanlage**
Thermoforming apparatus
Appareil de thermoformage

(30) Priorität: 30.09.2003 DE 10345534
(43) Veröffentlichungstag der Anmeldung: 06.04.2005
(73) Patentinhaber: KIEFEL AG, 83395 Freilassing (DE)
(72) Erfinder: Crepaz, Johannes, 5071 Wals-Siezenheim (AT)
(74) Vertreter: Patentanwaltskanzlei Liermann-Castell

(56) Entgegenhaltungen:
- EP-A- 0 767 047
- EP-A- 1 462 177
- DE-A- 10 022 269
- US-A- 4 428 723

## Beschreibung

Die Erfindung bezieht sich auf eine Thermoformanlage mit mindestens einer Station zur Herstellung oder Bearbeitung von aus einer Folie herstellbaren Formteilen, bei der die Folie an beiden Längsrändern durch jeweils eine Fördereinrichtung erfasst ist und durch die mindestens eine Station förderbar ist.

Thermoformanlagen dieser Art sind allgemein bekannt, siehe Dokument DE 100 22 269 A1.

Bei einem Werkzeugwechsel in einer Vorformstation, einer Formstation, einer Beschneidestation oder Ausstanzstation sowie einer Stapelstation, gibt es die Möglichkeit, die oberen und unteren Teile eines Werkzeuges oder einer sonstigen Bearbeitungsvorrichtung getrennt voneinander aus der jeweiligen Station herauszuholen und gegen ein entsprechendes anderes Teil zu ersetzen oder die zusammengehörenden Teile des Werkzeuges oder der Bearbeitungsvorrichtung werden in zentrierter Form als Block ausgetauscht.

Die erste Art des Austausches hat den Nachteil, dass die zusammengehörenden Teile beispielsweise Ober- und Unterwerkzeug wieder zueinander ausgerichtet werden müssen, was zeitaufwendig ist. Die zweite Art des Austausches in Form eines Blockes weist zwar diesen Nachteil nicht auf, erfordert aber Formstationen oder Ausstanzstationen bzw. Stapelstationen, die einen großen Hub aufweisen müssen, damit der gesamte Block, bestehend aus oberen und unteren am Ober- oder Untertisch bzw. an einer oberen oder unteren Trageinrichtung angeordneten Werkzeugen oder sonstigen Vorrichtungen unterhalb oder oberhalb der jeweiligen Fördereinrichtung seitlich herausgenommen werden kann. Große Hubwege erfordern entsprechend große Anlagen, die entsprechend aufwendig sind.

Aufgabe der Erfindung ist es, eine Thermoformanlage zu schaffen, bei welcher ein Werkzeugwechsel oder ein Wechsel sonstiger Bearbeitungsvorrichtungen, unabhängig vom zur Verfügung stehenden Hub der die Werkzeuge aufnehmenden Tische bzw. der entsprechenden Halterungen für die Vorrichtungen, durchführbar ist.

Diese Aufgabe wird ausgehend von einer Thermoformanlage der im Oberbegriff des Anspruchs 1 angegebenen Art erfindungsgemäß dadurch gelöst, dass mindestens eine der Fördereinrichtungen quer zur Förderrichtung aus ihrer Arbeitslage in eine zweite Lage überführbar ist, in der ein bzw. eine für die Herstellung oder Bearbeitung der Formteile dienendes Werkzeug oder dienende Vorrichtung unabhängig vom vorhandenen Verschiebeweg oder Hub des das Werkzeug oder die Vorrichtung tragenden Tisches oder sonstigen Tragevorrichtung auswechselbar ist.

Dadurch, dass die Transportvorrichtung aus demjenigen Bereich herausfahrbar ist, der für den Wechsel des Werkzeuges oder der Bearbeitungsvorrichtung benötigt wird, ist es möglich, einen Werkzeugwechsel auch bei solchen Anlagen vorzunehmen, die keinen großen Tischhub oder sonstigen Verschiebeweg für die entsprechenden Haltevorrichtungen aufweisen, um das Werkzeug oder die Bearbeitungsvorrichtung unterhalb oder oberhalb der Transporteinrichtung seitlich aus der Arbeitsposition herausfahren können. Die einzelnen Werkzeugteile, das heißt Oberwerkzeug und Unterwerkzeug oder sonstige zweiteiligen Vorrichtungen, können auf diese Weise in ihrer gegeneinander ausgerichteten bzw. zentrierten Lage verbleiben wodurch das nachträgliche zentrieren bei der Wiederverwendung dieser Werkzeuge und Vorrichtungen entfällt.

Der Hauptvorteil liegt jedoch darin, dass die einzelnen Stationen, sei es Formstation, Stanzstation usw., in der Ausfahrbarkeit der die einzelnen Werkzeugteile bzw. Vorrichtungsteile haltenden Tische oder Träger nicht besonders großzügig ausgelegt werden müssen, was zu Stationen mit einem geringeren technischen und damit finanziellen Aufwand führt.

Die in ihrer gegenseitigen Zentrierlage verbleibenden Werkzeugteile oder Vorrichtungsteile können nach dem Wechsel für eine Wiederverwendung an eine Temperierstation angeschlossen bleiben, so dass der spätere Einsatz bei einem wiederholten Wechsel ohne Zeitverzögerung im Arbeitstakt erfolgen kann, da auf ein Wiederaufwärmen bzw. Aufheizen der Werkzeugformen nicht mehr gewartet werden muss.

In vorteilhafter Ausgestaltung der Erfindung können als Fördereinrichtung eine Nadelkette, Rollenkette oder Riementrieb oder Kluppenkette dienen.

Eine weitere vorteilhafte Ausgestaltung der Erfindung besteht darin, dass die eine Fördereinrichtung parallel neben die zweite Fördereinrichtung verschiebbar ist. Dies führt zu einer konstruktiv einfachen Lösung, insbesondere dann, wenn in weiterer Ausgestaltung der Erfindung für die Verschiebung der Fördereinrichtung eine Breiteneinstelleinrichtung für die parallel laufenden Fördereinrichtungen vorgesehen ist. Eine solche Breiteneinstelleinrichtung ist notwendig, um die einzelnen Fördereinrichtungen auf die jeweilige Breite der zu transportierenden und zu verarbeitenden Folie einstellen zu können.

Die Erfindung wird nachfolgend anhand der in der Zeichnung dargestellten Ausführungsbeispiele näher erläutert. In der Zeichnung zeigen:
- **Figur 1:**: eine schematische Darstellung einer Thermoformanlage;
- **Figur 2:**: eine schematische Darstellung einer Formstation einer Thermoformanlage in Arbeitsposition;
- **Figur 3:**: eine Formstation in einer Werkzeugwechselposition;
- **Figur 4:**: die Formstation nach den Figuren 2 und 3 mit ausgeschobenem Werkzeug;
- **Figur 5:**: eine Draufsicht auf die Formstation gemäß Figur 4;
- **Figur 6:**: eine Draufsicht auf eine Formstation eines zweiten Ausführungsbeispieles.

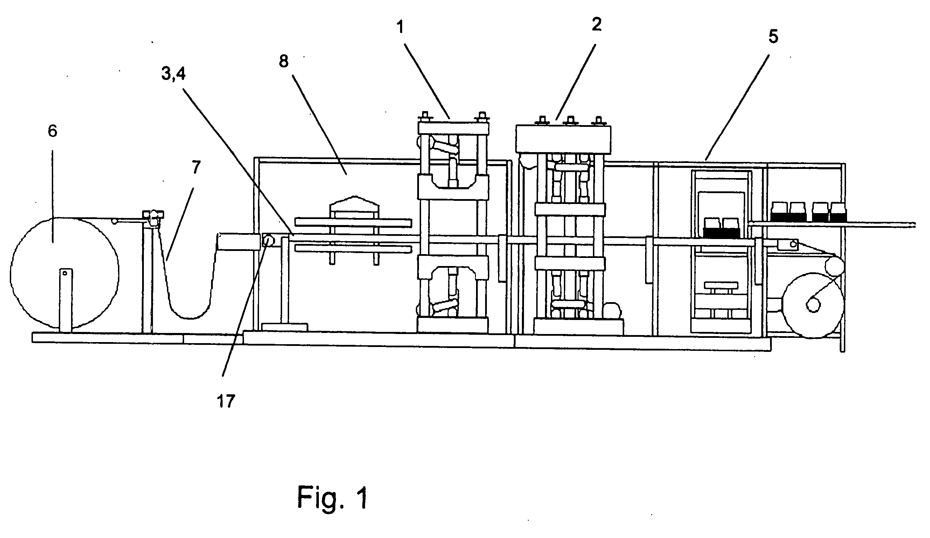

Die in Figur 1 schematisch dargestellte Thermoformanlage umfasst eine Formstation 1, eine Stanzstation 2, parallel zueinander laufende als Fördereinrichtung dienende Kettenschienen 3, 4 sowie eine Stapelstation 5. Die Kettenschienen 3, 4 transportieren eine auf einer Rolle 6 aufgerollte Folie 7 durch die einzelnen Stationen, nämlich die Formstation 1, die Stanzstation 2 und die Stapelstation 5. Nach der Stanzstation 2 liegt nur noch ein Foliengitter vor, nachdem die geformten Teile in der Stanzstation 2 ausgestanzt wurden. Die ausgestanzten Teile werden dann in der Stapelstation von unten her ineinander gestapelt und nach Erreichen einer bestimmten Stapelhöhe wegbefördert. Mit 8 ist eine Heizstation bezeichnet, die sich vor der Formstation befindet, um die Folie aufzuheizen.

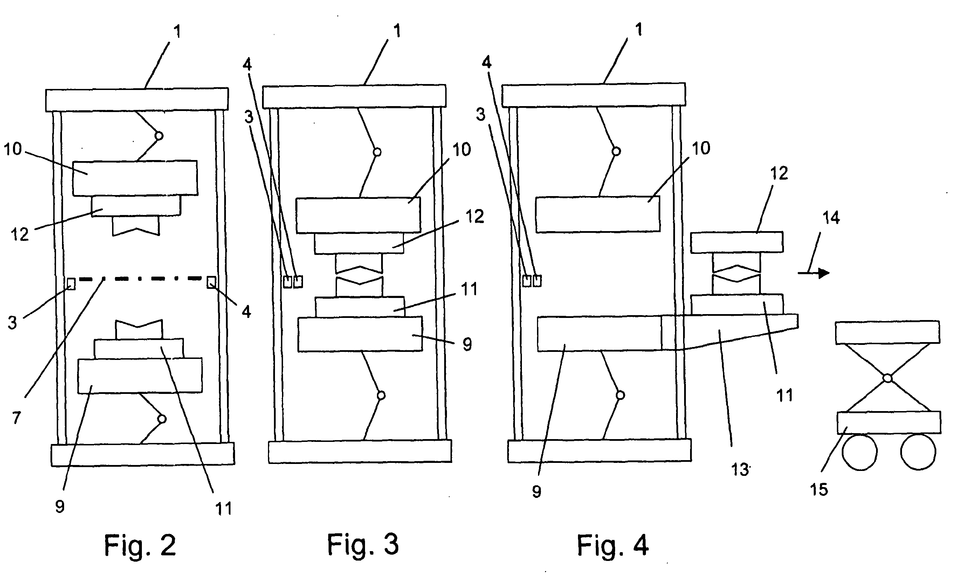

Die Figuren 2 bis 4 zeigen einen Querschnitt durch die Formstation 1 in verschiedenen Arbeitsstellungen. In dieser Formstation ist ein unterer Hubtisch mit 9 und ein oberer Tisch mit 10 bezeichnet. Jeder dieser Tische trägt ein Werkzeug und zwar trägt der untere Tisch 9 ein Werkzeug 11 und der obere Tisch ein Werkzeug 12. In Figur 2 sind die beiden Tische 9 und 10 auseinandergefahren und die beiden Kettenschienen 3 und 4 halten eine aufgeheizte Folie 7 für einen Formvorgang bereit, bei welchem die beiden Werkzeuge 11 und 12 zusammengefahren werden, um die gewünschte Verformung der Folie zu einem Formteil zu bewirken.

In Figur 3 sind die beiden Tische 9 und 10 und damit auch die Werkzeuge 11 und 12 in einer gegeneinander zentrierten Stellung zusammengefahren, wobei vorher die eine Kettenschiene 4 neben die Kettenschiene 3 verschoben wurde, um den Platz zwischen den beiden Tischen 9 und 10 an der in Figur 3 rechten Seite freizumachen.

Figur 4 zeigt die Formstation in einer Stellung, in welcher der aus Unterwerkzeug 11 und Oberwerkzeug 12 bestehende Block bereits von den beiden Tischen 9 und 10 gelöst und auf einen Werkzeugwechselarm 13 ausgefahren ist. Von dort gelangt der aus den beiden Werkzeugen bestehende Block entsprechend der Pfeilrichtung 14 auf einen Werkzeugwechselwagen 15, der zum Abtransport der Werkzeuge 11 und 12 dient. Nach dem Abtransport der Werkzeuge 11 und 12 können an den Tischen 9 und 10 andere Werkzeuge befestigt werden, um andere Formteile herstellen zu können.

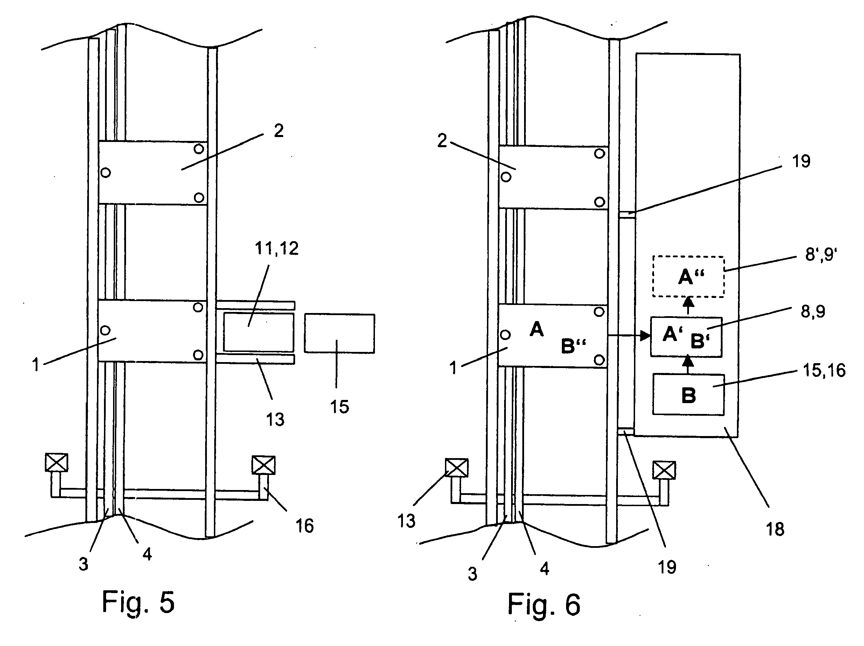

Figur 5 zeigt eine Draufsicht auf die Anordnung gemäß 4. Hieraus ist die Lage des aus den Werkzeugen 11 und 12 bestehenden Blockes auf dem Werkzeugwechselarm 13 erkennbar. Aus Figur 5 ist auch noch eine Breiteneinstelleinrichtung 16 erkennbar, die in erster Linie zur Einstellung des gegenseitigen Abstandes der als Transporteinrichtung für die Folie dienenden Kettenschienen 3 und 4 dient, wobei diese Breiteneinstelleinrichtung gleichzeitig auch zur Verschiebung der Kettenschiene 4, in die in den Figuren 3 bis 5 darstellte Lage eingesetzt wird. Zum Antrieb der Fördereinrichtungen 3, 4 bzw. der Förderketten in Längsrichtung dient eine in Figur 1 schematisch angedeutete Antriebsvorrichtung 17.

Figur 6 zeigt eine Draufsicht auf eine Formstation entsprechend der Darstellung in Figur 5 jedoch für einen geänderten Werkzeugwechsel.

Wie aus dieser Figur ersichtlich, wird der mit A bezeichnete aus dem Oberwerkzeug und dem Unterwerkzeug bestehende Werkzeugblock in die mit A' bezeichnete Stellung auf eine automatisch arbeitende Werkzeugwechseleinrichtung 18 gezogen oder geschoben und von dort in die Stellung A" verbracht. Ein zweiter mit B bezeichneter Werkzeugblock wird dann in die Stellung B' verbracht, um von dort in die Formstation hinein gezogen oder geschoben werden zu können. In dieser Stellung ist der Werkzeugblock mit B" bezeichnet. Der für den Wechsel der Werkzeuge notwendige Wechsel der Energieanschlüsse ist nicht dargestellt. Die Werkzeuge werden in den einzelnen Positionen auf ihrer Betriebstemperatur durch Vorwärmen gehalten, so dass beispielsweise der Werkzeugblock B in die Formstation bereits vorgeheizt eingefahren wird. Mit 19 sind Positionierhilfen bezeichnet, um die Werkzeugwechseleinrichtung 18 in der richtigen Position in Bezug auf die Formstation 1 zu halten. Die Werkzeugwechseleinrichtung 18 kann als Verschiebebahnhof, als Karussell oder als Paternoster ausgebildet sein.

## Patentansprüche

1. Thermoformanlage mit mindestens einer Station (1, 2, 5) zur Herstellung oder Bearbeitung von aus einer Folie (7) herstellbaren Formteilen, bei der die Folie (7) an beiden Längsrändern durch jeweils eine Fördereinrichtung (3, 4) erfasst ist und in einer Förderrichtung durch die mindestens eine Station förderbar ist, ***dadurch gekennzeichnet, dass*** mindestens eine der Fördereinrichtungen (4) quer zur Förderrichtung aus ihrer Arbeitslage in eine zweite Lage überführbar ist, in der ein bzw. eine für die Herstellung oder Bearbeitung der Formteile dienendes Werkzeug (11, 12) oder dienende Vorrichtung unabhängig vom vorhandenen Verschiebeweg oder Hub des das Werkzeug (11, 12) oder die Vorrichtung tragenden Tisches (9,10) oder einer sonstigen Tragevorrichtung auswechselbar ist.

2. Thermoformanlage nach Anspruch 1, ***dadurch gekennzeichnet, dass*** als Fördereinrichtung (3, 4) eine Nadelkette, eine Rollenkette, ein Riementrieb oder eine Kluppenkette dient.

3. Thermoformanlage nach Anspruch 1 oder 2, ***dadurch gekennzeichnet, dass*** die eine Fördereinrichtung (4) parallel neben die zweite Fördereinrichtung (3) verschiebbar ist.

4. Thermoformanlage nach einem der Ansprüche 1 bis 3, ***dadurch gekennzeichnet, dass*** für die Verschiebung der Fördereinrichtung (4) eine Breiteneinstelleinrichtung (16) für die parallel laufenden Fördereinrichtungen (3, 4) vorgesehen ist.

## Claims

1. A thermoforming line with at least one station (1, 2, 5) for manufacturing or processing preformed parts that may be made from a foil (7) in which said foil (7) is taken hold of at a respective one of the longitudinal edges by a conveyor device (3, 4) and is conveyable in one direction of transport through the at least one station, ***characterized in that*** at least one of the conveyor devices (4) is transferable across the direction of transport from its working position to a second position in which a tool (11, 12) or a device for manufacturing or processing the preformed parts may be replaced independent of the displacement path or the travel of the table (9, 10) carrying said tool (11, 12) or said device or of any other carrier device.

2. The thermoforming line as set forth in claim 1, ***characterized in that*** a pin chain, a roller chain, a belt drive or a clip chain is used as the conveyor device (3, 4).

3. The thermoforming line as set forth in claim 1 or 2, ***characterized in that*** a conveyor device (4) is displaceable beside and parallel to the second conveyor device (3).

4. The thermoforming line as set forth in any one of the claims 1 through 3, ***characterized in that*** a width adjusting device (16) for displacing the conveyor device (4) is provided for the conveyor devices (3, 4) running parallel to each other.

## Revendications

1. Ligne de thermoformage avec au moins un poste (1, 2, 5) destinée à la réalisation ou à l'usinage de pièces destinées à être mises en forme et aptes à être réalisées à partir d'une feuille (7) dans laquelle la feuille (7) est saisie à chacun de ses deux bords longitudinaux par un système de convoyage (3, 4) respectif et est apte à être transportée au travers de l'au moins un poste suivant une direction de transport, ***caractérisée en ce qu'**au* moins un des systèmes de convoyage (4) est apte à être transféré, en travers de sa direction de transport, de sa position de travail dans une deuxième position dans laquelle un outil (11, 12) ou un dispositif servant à la réalisation ou à l'usinage des pièces destinées à être mises en forme est échangeable indépendamment du trajet de déplacement ou de la course existante de la table (9, 10) portant l'outil (11, 12) ou le dispositif ou d'un autre dispositif porteur quelconque.

2. Ligne de thermoformage selon la revendication 1, ***caractérisée en ce qu*'**une chaîne à aiguilles, une chaîne à rouleaux, une transmission par courroie ou une chaîne à pinces sert de dispositif de convoyage (3,4).

3. Ligne de thermoformage selon la revendication 1 ou 2, ***caractérisée en ce que*** l'un des systèmes de convoyage (4) est mobile en coulissement parallèlement à et à côté du deuxième système de convoyage (3).

4. Ligne de thermoformage selon l'une quelconque des revendications 1 à *3, **caractérisée en ce que**,* pour le déplacement du système de convoyage (4), un système de réglage en largeur (16) est prévu pour les systèmes de convoyage (3, 4) défilant parallèlement entre eux.
